# EUROPÄISCHE PATENTSCHRIFT

(11) **EP 2 564 581 B1**
(45) Veröffentlichungstag und Bekanntmachung des Hinweises auf die Patenterteilung: **23.07.2014**
(21) Anmeldenummer: 11716206.5
(22) Anmeldetag: 15.04.2011
(51) Int. Cl.: H04M 1/2745, H04M 1/60

(54) **KRAFTFAHRZEUGFREISPRECHEINRICHTUNG**
MOTOR VEHICLE HANDS-FREE DEVICE
DISPOSITIF DE COMMUNICATION MAINS LIBRES D'UN VÉHICULE À MOTEUR

(30) Priorität: 30.04.2010 DE 102010028449
(43) Veröffentlichungstag der Anmeldung: 06.03.2013
(73) Patentinhaber: Bayerische Motoren Werke Aktiengesellschaft, 80809 München (DE)
(72) Erfinder: RAU, Richard, 85221 Dachau (DE); SCHRAMM, Peter, 85386 Eching (DE); AREND, Martin, 81247 Muenchen (DE)
(86) Internationale Anmeldenummer: PCT/EP2011/055980
(87) Internationale Veröffentlichungsnummer: WO 2011/134806

(56) Entgegenhaltungen:
- DE-A1-102006 010 611
- DE-A1-102009 009 696
- US-A1- 2004 052 356

## Beschreibung

Die Erfindung betrifft eine Kraftfahrzeugfreisprecheinrichtung.

Die weiter rasante Verbreitung der Mobilfunktechnik führte in den letzten Jahren unter anderem zur Entwicklung und Bereitstellung von Kraftfahrzeugfreisprecheinrichtungen, welche mit Mobiltelefonen zusammenwirken. Als besonders fortgeschritten gelten dabei Kraftfahrzeugfreisprecheinrichtungen, welche schnurlos, insbesondere basierend auf dem so genannten Bluetooth-Standard, mit einem Mobiltelefon, das sich insbesondere im Fahrzeug oder in der Nähe des Fahrzeuges befindet, zusammenwirken oder kommunizieren.

Dazu ist es bekannt, dass eine Kraftfahrzeugfreisprecheinrichtung automatisch eine Bluetooth-Verbindung zu einem der Kraftfahrzeugfreisprecheinrichtung zugeordneten Mobiltelefon aufbaut oder umgekehrt, sobald sich das Mobiltelefon in der Reichweite der Kraftfahrzeugfreisprecheinrichtung befindet und umgekehrt. Über die Bluetooth-Verbindung können dann das Mobiltelefon und die Kraftfahrzeugfreisprecheinrichtung Daten austauschen. Durch den Austausch von Sprachdaten kann die Sprachkommunikation basierend auf der Kraftfahrzeugfreisprecheinrichtung und dem Mobiltelefon über ein Mobilfunksystem realisiert werden. Durch den Austausch von Steuerdaten kann die Steuerung des Mobiltelefons durch eine Benutzerschnittstelle eines Kraftfahrzeuges realisiert werden.

DE 10 2006 010611 beschreibt eine Freisprecheinrichtung für ein Fahrzeug, mit einer Funkschnittstelle zum Verbinden mit Mobiltelefonen und einer Steuereinrichtung, durch die auf dem Mobiltelefon gespeicherte Telefonbuchdaten von der Freisprecheinrichtung angefordert und daraufhin an diese übertragen werden.

Der Erfindung liegt nun die Aufgabe zu Grunde, eine technische Lehre anzugeben, mit der zwei Mobiltelefone über eine Kraftfahrzeugfreisprecheinrichtung komfortabel bedient werden können.

Diese Aufgabe wird durch die Merkmale des Anspruchs 1 gelöst. Vorteilhafte Weiterbildungen der Erfindung sind den abhängigen Ansprüchen zu entnehmen.

Gemäß der Erfindung umfasst eine Kraftfahrzeugfrelsprecheinrichtung eine Funkschnittstelle, wie beispielsweise eine Bluetooth-Schnittstelle, die dazu eingerichtet ist, dass mindestens ein erstes Mobiltelefon und ein zweites Mobiltelefon mit der Kraftfahrzeugfreisprechelnrichtung, insbesondere parallel oder gleichzeitig, verbindbar oder verbunden sind.

"Verbunden" bedeutet dabei vorzugsweise, dass tatsächlich eine Verbindung aufgebaut ist und/oder tatsächlich Daten übertragen werden, insbesondere dass die Mobiltelefone mit der Kraftfahrzeugfreisprecheinrichtung im Sinne der Bluetooth-Spezifikation als "verbunden" gelten. Eine Verbindung ist vorzugsweise nur mit Mobiltelefonen möglich, die zuvor mit der Kraftfahrzeugfreisprecheinrichtung gekoppelt oder "gepaired" wurden.

Zudem ist eine Steuereinrichtung vorgesehen, die derart eingerichtet ist, dass Mobiltelefon-Adressbucheinträge von dem ersten Mobiltelefon, beispielsweise aus einem Teilnehmeridentifizierungsmodul(SIM)-Speicher und/oder aus einem Telefonspeicher, und Mobiltelefon-Adressbucheinträge von dem zweiten Mobiltelefon über die Funkschnittstelle auf die Kraftfahrzeugfreisprecheinrichtung transferbierbar sind oder transferiert werden.

Basierend auf den Mobiltelefon-Adressbucheinträgen des ersten Mobiltelefons und den Mobiltelefon-Adressbucheinträgen des zweiten Mobiltelefons ist insbesondere automatisch ein gemeinsames, insbesondere zusammengefasstes, Kraftfahrzeugfreisprecheinrichtungs-Adressbuch generierbar oder wird ein gemeinsames Kraftfahrzeugfreisprecheinrichtungs-Adressbuch generiert. Der Begriff "Adressbuch" umfasst dabei auch den Begriff "Telefonbuch".

Dadurch kann ein Nutzer einer Kraftfahrzeugfreisprecheinrichtung während der Fahrt schnell, einfach, sicher, komfortabel und ohne vom Verkehrsgeschehen abgelenkt zu werden auf die Moblitelefon-Adressbucheinträge von zwei Mobiltelefonen zugreifen.

Dabei ist das Kraftfahrzeugfreisprecheinrichtungs-Adressbuch in einer Speichereinrichtung der Kraftfahrzeugfreisprecheinrichtung speicherbar und/oder ganz oder teilweise auf einer mit der Kraftfahrzeugfreisprecheinrichtung gekoppeiten Anzeigeeinheit ausgebbar.

Es ist vorgesehen, dass zugeordnet zu den Adressbucheinträgen ein identitätsbezeichner (Quell-ID) des Mobiltelefons (Quell-Moblltelefon), von dem der oder die Adressbucheinträge stammen, auf die Kraftfahrzeugfreisprecheinrichtung transferbierbar ist. Der Identitätsbezeichner oder eine davon abgeleitete Information ist zusammen mit dem oder den zugehörigen Adressbucheinträgen in der Speichereinrichtung der Kraftfahrzeugfreisprecheinrichtung speicherbar und/oder zusammen mit dem oder den zugehörigen Adressbucheinträgen auf der mit der Kraftfahrzeugfreisprecheinrichtung gekoppelten Anzeigeeinheit ausgebbar.

Es ist vorgesehen, dass durch die Kraftfahrzeugfreisprecheinrichtung den von einem bestimmten Mobiltelefon stammenden Adressbucheinträgen von sich aus ein durch die Kraftfahrzeugfreisprecheinrichtung generierter Identitätsbezeichner zugeordnet wird.

Dadurch liegen in der Kraftfahrzeugfreisprecheinrichtung Informationen über die Quellen der Adressbucheinträge vor. Zudem kann ein Nutzer die Quelle (erstes oder zweites Mobiltelefon) verschiedener Adressbucheinträge erkennen.

Es ist auch vorgesehen, dass Adressbucheinträge des gemeinsamen Kraftfahrzeugfreisprecheinrichtungs-Adressbuches gemeinsam sortierbar, beispielsweise nach Alphabet, nach Quell-ID oder Zugriffshäufigkeit, sind, oder gemeinsam filterbar, beispielsweise nach Quell-ID oder Adressbucheintragstyp (privat, geschäftlich), sind. Dadurch werden die oben genannten Vorteile verstärkt.

Es ist eine vorteilhafte Ausführungsform der Erfindung, dass neben den Mobiltelefon-Adressbucheinträgen Nachrichten, Kalendereinträge, Aufgaben und/oder Notizen von den Mobiltelefonen über die Funkschnittstelle auf die Kraftfahrzeugfreisprecheinrichtung transferbierbar sind, und dass basierend auf den transferierten Nachrichten, Kalendereinträgen, Aufgaben und/oder Notizen eine gemeinsame, insbesondere zusammengefasste, Nachrichtenliste, ein gemeinsamer Kalender, eine gemeinsame Aufgabenliste und/oder eine gemeinsame Notizenliste generierbar sind. Weiterbildungen dieser Ausführungsform analog zu den weiter oben und weiter unten genannten Weiterbildungen der Adressbuchvariante liegen ebenfalls im Rahmen der Erfindung.

Es ist auch eine Weiterbildung der Erfindung, dass ein Rufaufbau automatisch über das Mobiltelefon durchführbar ist oder durchgeführt wird, dessen identitätsbezeichner einem ausgewählten Adressbucheintrag zugeordnet ist. Die Auswahl eines Adressbucheintrages erfolgt beispielsweise mittels einer der Kraftfahrzeugfreisprecheinrichtung zugeordneten Eingabeeinheit. Alternativ dazu kann vorgesehen sein, dass ein Nutzer manuell auswählt, über welches verbundene Mobiltelefon ein Rufaufbau zu einer Rufnummer eines ausgewählten Adressbucheintrages des gemeinsamen Kraftfahrzeugfreisprecheinrichtungs-Adressbuches erfolgen soll.

Eine weitere Ausgestaltung sieht vor, dass nutzerausgelöst (beispielsweise in Reaktion auf eine entsprechende Nutzereingabe an einer mit der Kraftfahrzeugfreisprecheinrichtung gekoppelten Eingabeeinheit) eine Lautsprechereinrichtung und eine Mikrofoneinrichtung der Kraftfahrzeugfreisprecheinrichtung von einer - über das erste Mobiltelefon aufgebauten - Kommunikationsverbindung auf eine - über das zweite Mobiltelefon aufgebaute - Kommunikationsverbindung umschaltbar ist, insbesondere indem von der Kraftfahrzeugfreisprecheinrichtung über die Funkschnittstelle ein Halten-Befehl zu dem ersten Mobiltelefon gesendet wird und/oder ein Gesprächsaktivierungs-Befehl zu dem zweiten Mobiltelefon gesendet wird, oder umgekehrt.

Bei einer anderen Weiterbildung ist vorgesehen, dass eine Lautsprechereinrichtung und eine Mikrofoneinrichtung der Krafifahrzeugfreisprecheinrichtung nutzerausgelöst gleichzeitig auf eine über das erste Mobiltelefon aufgebaute Kommunikationsverbindung und auf eine über das zweite Mobiltelefon aufgebaute Kommunikationsverbindung schaltbar ist.

Im Folgenden wird die Erfindung anhand von Beispielen unter Bezugnahme auf die folgende Figur näher erläutert:

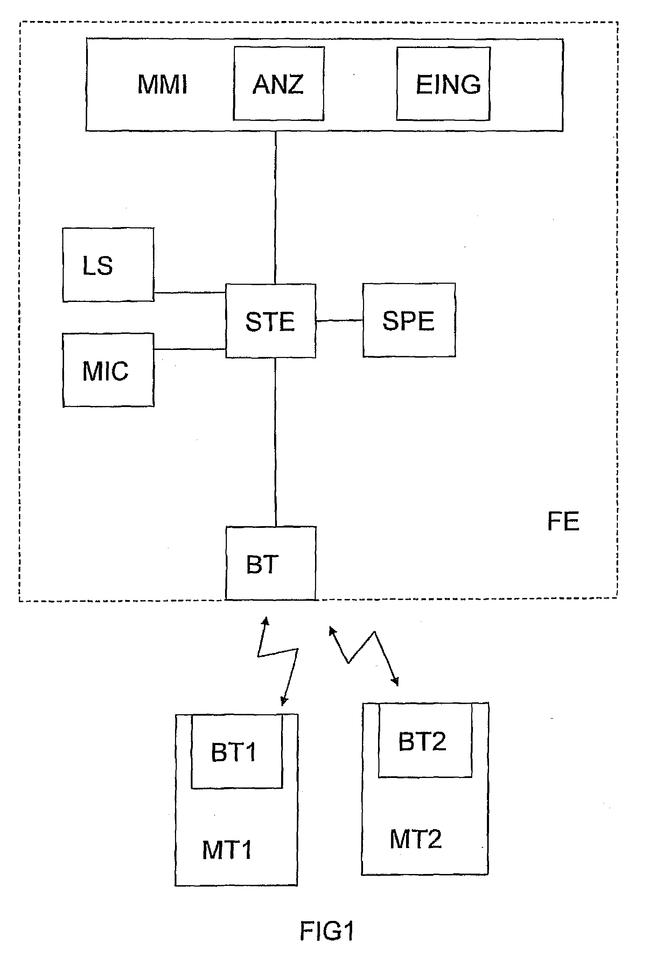

- Figur 1: zeigt ein vereinfachtes Prinzipschaltbild einer Kraftfahrzeugfreisprecheinrichtung mit zwei Mobiltelefonen.

Figur 1 zeigt in einem Fahrzeug eine Kraftfahrzeugfreisprecheinrichtung FE, die ein Steuergerät STE, eine Speichereinrichtung SPE, ein Mikrofon MIC, einen Lautsprecher LS und eine Bluetooth-Obertragungseinrichtung BT umfasst.

Zudem ist die Kraftfahrzeugfreisprecheinrichtung FE mit einer Benutzerschnittstelle MMI ausgestattet oder gekoppelt, die eine Anzeigeeinrichtung ANZ, wie ein Grafikdisplay, und eine Eingabeeinrichtung EING, wie einen Schalter oder ein Menüsteuer- und Menüpunktauswahlelement, umfasst. Die Benutzerschnittstelle MMI kann auch zur Steuerung anderer Fahrzeugsysteme eingesetzt werden. Sie kann, muss aber nicht, Bestandteil der Kraftfahrzeugfreisprecheinrichtung FE sein.

Die Kraftfahrzeugfreisprecheinrichtung FE samt Benutzerschnittstelle MMI wird durch die Steuereinrichtung STE, die als programmgesteuerte Prozessoreinrichtung ausgeführt sein kann, angesteuert. Die Steuereinrichtung STE kann zentral oder verteilt realisiert sein, sie kann als Teil der Benutzerschnittstelle MMI und/oder der Kraftfahrzeugfreisprecheinrichtung FE realisiert sein, und/oder sie kann separat von der Benutzerschnittstelle MMI und/oder der Kraftfahrzeugfreisprecheinrichtung FE realisiert sein. Die Steuereinrichtung STE kann auch zur Steuerung anderer Fahrzeugsysteme eingesetzt werden.

Die Komponenten der Kraftfahrzeugfreisprecheinrichtung FE sind über einen Datenbus oder Analogleitungen miteinander verbunden.

Über die Bluetoothschnittstelle BT sind parallel zwei Mobiltelefone MT1,MT2 mit der Kraftfahrzeugfreisprecheinrichtung FE verbunden.

Die Mobiltelefone MT1,MT2 sind ebenfalls jeweils mit einer Bluetooth-Schnittstelle BT1,BT2 ausgestattet. Außerdem verfügen die Mobiltelefone MT1,MT2 jeweils über einen Adressbuchspeicher, der als Teil eines Mobiltelefonspeichers und/oder als Teil eines Teilnehmehdentifizierungsmodul(SIM)-Speichers ausgeführt sein kann.

Die Steuereinrichtung STE der Kraftfahrzeugfreisprecheinrichtung FE und die Mobiltelefone MT1,MT2 sind derart eingerichtet, dass unmittelbar oder mittelbar nach der Verbindung der Mobiltelefone MT1 ,MT2 mit der Kraftfahrzeugfreisprecheinrichtung FE automatisch (ggf. nach einer Nutzerbestätigung) die Adressbucheinträge aus dem Adressbuchspeicher der Mobiltelefone MT1,MT2 über die Bluetooth-Schnittstelle BT,BT1,BT2 in die Speichereinrichtung SPE der Kraftfahrzeugfreisprecheinrichtung FE übertragen werden.

Den von dem ersten Mobiltelefon MT1 stammenden Adressbucheinträgen wird in der Kraftfahrzeugfreisprecheinrichtung FE eine auf das erste Mobiltelefon MT1 verweisende Quellmobiltelefon-ID zugeordnet. Den von dem zweiten Mobiltelefon MT2 stammenden Adressbucheinträgen wird in der Kraftfahrzeugfreisprecheinrichtung FE eine auf das zweite Mobiltelefon MT2 verweisende Quellmobiltelefon-ID zugeordnet. Die entsprechenden Quellmobiltelefon-IDs können dabei im Zuge des Transfers der Adressbucheinträge auf die Kraftfahrzeugfreisprecheinrichtung transferiert werden oder durch die Kraftfahrzeugfreisprecheinrichtung selbst generiert werden.

Basierend auf den von beiden Mobiltelefonen MT1,MT2 stammenden Adressbucheinträgen wird in der Kraftfahrzeugfreisprecheinrichtung FE ein zusammengefasstes Adressbuch generiert, welches nach verschiedenen Kriterien sortierbar und filterbar ist. Dieses zusammengefasste Adressbuch ist auf dem Display ANZ anzeigbar. Die einzelnen Adressbucheinträge können zusammen mit der zugehörigen Quellmobiltelefon-ID dargestellt werden.

Wird durch einen Nutzer ein Rufaufbau zu einem Teilnehmer initiiert, indem ein entsprechender Adressbucheintrag ausgewählt wird, so wird für den Rufaufbau automatisch das Mobiltelefon angesprochen, auf das die dem Adressbucheintrag zugeordnete Quellmobiltelefon-ID verweist.

Wenn über beide Mobiltelefone MT1,MT2 jeweils eine Kommunikationsverbindung aufgebaut ist, wird es einem Nutzer ermöglicht, mittels der Benutzerschnittstelle MMI die Kraftfahrzeugfreisprecheinrichtung FE, insbesondere das Mikrofon MIC und den Lautsprecher LS, gezielt auf ausschließlich eine der beiden Kommunikationsverbindungen oder auf beide Kommunikationsverbindungen zu schalten.

Eine bevorzugte Ausführungsvariante sieht vor, dass-falls ein Adressbucheintrag, Insbesondere ein Adressbucheintrag-Name (z.B. Nachname), sowohl im ersten Mobiltelefon MT1 als auch auf dem zweiten Mobiltelefone MT2 vorhanden ist - entweder der Adressbucheintrag in das zusammengefasste Adressbuch übernommen wird, der von einem - durch den Nutzer zuvor ausgewählten - bevorzugten Mobiltelefon stammt, oder der durch den Nutzer nach einer entsprechende Eingabeaufforderung durch die Kraftfahrzeugfreisprecheinrichtung manuell ausgewählt wird.

Eine andere bevorzugte Ausführungsvariante sieht vor, dass - falls ein Adressbucheintrag, insbesondere ein Adressbucheintrag-Name (z.B. Nachname), mehrfach vorkommt - überprüft wird, ob es sich bei den Adressbucheinträgen um Duplikate handelt oder nicht. Falls es sich um Duplikate handelt, wird nur einer der Adressbucheinträge übernommen. Falls es sich nicht um Duplikate handelt, werden die Adressbucheinträge zu einem "großen" Adressbucheintrag zusammengefasst. Liegt beispielsweise der Adressbuchteintrag "Müller" auf dem SIM-Kartenspeicher und dem Moblitelefonspeicher eines Mobiltelefons, so wird in der zusammengefassten Liste nur ein Adressbuchteintrag angezeigt. Liegt beispielsweise der Adressbuchteintrag "Mayer" mit Dienstnummer und Privatnummer und ein weiterer Adressbuchteintrag "Mayer" mit Mobiltelefonnummer im Mobiltelefonspeicher, dann werden beide Adressbucheinträge zu einem Adressbucheintrag zusammen gefasst.

Weitere Ausführungsvarianten sehen analog zu den eben beschriebenen Ausführungsbeispielen vor, dass neben den Mobiltelefon-Adressbucheinträgen Nachrichten, Kalendereinträge, Aufgaben und/oder Notizen von den Mobiltelefonen über die Funkschnittstelle auf die Kraftfahrzeugfreisprecheinrichtung transferbierbar sind, um eine zusammengefasste Nachrichtenliste, einen zusammengefassten Kalender, eine zusammengefasste Aufgabenliste und/oder eine zusammengefasste Notizenliste zu erzeugen und ggf. zu filtern.

## Patentansprüche

1. Kraftfahrzeugfreisprecheinrichtung
- mit einer Funkschnittstelle, die dazu eingerichtet ist, dass mindestens ein erstes Mobiltelefon und ein zweites Mobiltelefon mit der Kraftfahrzeugfreisprecheinrichtung, insbesondere parallel oder gleichzeitig, verbindbar sind, und
- mit einer Steuereinrichtung, die derart eingerichtet ist,
dass Mobiltelefon-Adressbucheinträge von dem ersten Mobiltelefon und Mobiltelefon-Adressbucheinträge von dem zweiten Mobiltelefon über die Funkschnittstelle auf die Kraftfahrzeugfreisprecheinrichtung transferbierbar sind, dass basierend auf den Mobiltelefon-Adressbucheinträgen des ersten Mobiltelefons und den Mobiltelefon-Adressbucheinträgen des zweiten Mobiltelefons ein gemeinsames Kraftfahrzeugfreisprecheinrichtungs-Adressbuch generierbar ist,
dass das Kraftfahrzeugfreisprecheinrichtungs-Adressbuch in einer Speichereinrichtung der Kraftfahrzeugfreisprecheinrichtung speicherbar ist und/oder ganz oder teilweise auf einer mit der Kraftfahrzeugfreisprecheinrichtung gekoppelten Anzeigeeinheit ausgebbar ist,
dass zugeordnet zu den Adressbucheinträgen ein Identitätsbezeichner des Mobiltelefons, von dem die Adressbucheinträge stammen, auf die Kraftfahrzeugfreisprecheinrichtung transferbierbar ist,
dass der Identitätsbezeichner oder eine davon abgeleitete Information zusammen mit den zugehörigen Adressbucheinträgen in der Speichereinrichtung der Kraftfahrzeugfreisprecheinrichtung speicherbar ist und/oder zusammen mit den zugehörigen Adressbucheinträgen auf der mit der Kraftfahrzeugfreisprecheinrichtung gekoppelten Anzeigeeinheit ausgebbar ist,
dass Adressbucheinträge des gemeinsamen Kraftfahrzeugfreisprecheinrichtungs-Adressbuches gemeinsam sortierbar oder filterbar sind, und
dass ein auf der Auswahl eines Adressbucheintrages über eine der Kraftfahrzeugfreisprecheinrichtung zugeordnete Eingabeeinheit basierender Rufaufbau automatisch über das Mobiltelefon durchführbar ist, dessen Identitätsbezeichner dem ausgewählten Adressbucheintrag zugeordnet ist.

2. Kraftfahrzeugfreisprecheinrichtung nach Anspruch 1,
bei der neben den Mobiltelefon-Adressbucheinträgen Nachrichten, Kalendereinträge, Aufgaben und/oder Notizen von den Mobiltelefonen über die Funkschnittstelle auf die Kraftfahrzeugfreisprecheinrichtung transferbierbar sind, und
bei der basierend auf den transferierten Nachrichten, Kalendereinträge, Aufgaben und/oder Notizen eine gemeinsame Nachrichtenliste, ein gemeinsamer Kalender, eine gemeinsame Aufgabenliste und/oder eine gemeinsame Notizenliste generierbar sind.

3. Kraftfahrzeugfreisprecheinrichtung nach einem der vorhergehenden Ansprüche,
bei der nutzerausgelöst eine Lautsprechereinrichtung und eine Mikrofoneinrichtung der Kraftfahrzeugfreisprecheinrichtung von einer über das erste Mobiltelefon aufgebauten Kommunikationsverbindung auf eine über das zweite Mobiltelefon aufgebaute Kommunikationsverbindung umschaltbar ist und umgekehrt.

4. Kraftfahrzeugfreisprecheinrichtung nach einem der vorhergehenden Ansprüche,
bei der nutzerausgelöst eine Lautsprechereinrichtung und eine Mikrofoneinrichtung der Kraftfahrzeugfreisprecheinrichtung gleichzeitig auf eine über das erste Mobiltelefon aufgebaute Kommunikationsverbindung und auf eine über das zweite Mobiltelefon aufgebaute Kommunikationsverbindung schaltbar ist.

## Claims

1. A motor vehicle hands-free telephone device
- with a radio interface configured so that at least a first mobile telephone and a second mobile telephone can be connected to the motor vehicle hands-free telephone device, more especially in parallel or simultaneously, and
- with a control device configured in such a way
that mobile telephone address book entries from the first mobile telephone and mobile telephone address book entries from the second mobile telephone can be transferred via the radio interface to the motor vehicle hands-free telephone device, that, based on the mobile telephone address book entries of the first mobile telephone and the mobile telephone address book entries of the second mobile telephone, a common motor vehicle hands-free telephone device address book can be generated, that the motor vehicle hands-free telephone device address book can be stored in a memory device of the motor vehicle hands-free telephone device and/or can be output, completely or partially, to a display unit coupled to the motor vehicle hands-free telephone device, that, associated with the address book entries, an identity tag of the mobile telephone, from which the address book entries originate, can be transferred to the motor vehicle hands-free telephone device, that the identity tag or information derived therefrom can be stored together with the associated address book entries in the memory device of the motor vehicle hands-free telephone device and/or can be output, together with the associated address book entries, to the display unit coupled to the motor vehicle hands-free telephone device, that address book entries of the common motor vehicle hands-free telephone device address book can be sorted or filtered together, and that a call set-up based on the selection of an address book entry by means of an input unit associated with the motor vehicle hands-free telephone device can be carried out automatically by means of the mobile telephone, the identity tag of which is associated with the selected address book entry.

2. A motor vehicle hands-free telephone device according to claim 1, wherein, apart from the mobile telephone address book entries, news, calendar entries, tasks and/or memos can be transferred from the mobile telephones via the radio interface to the motor vehicle hands-free telephone device, and, based on the transferred news, calendar entries, tasks and/or memos, a common news list, a common calendar, a common task list and/or a common memo list can be generated.

3. A motor vehicle hands-free telephone device according to an one of the preceding claims, wherein a loudspeaker device and a microphone device of the motor vehicle hands-free telephone device, triggered by the user, can be switched from a communication link established by the first mobile telephone to a communication link established by the second mobile telephone and vice versa.

4. A motor vehicle hands-free telephone device according to any one of the preceding claims, wherein a loudspeaker device and a microphone device of the motor vehicle hands-free telephone device, triggered by the user, can be switched simultaneously to a communication link established by the first mobile telephone and to a communication link established by the second mobile telephone.

## Revendications

1. Dispositif de communication mains-libres pour un véhicule automobile comportant :
- une interface radio qui est réalisée de sorte qu'au moins un premier téléphone mobile et un second téléphone mobile puissent être mis en liaison avec le dispositif de communication mains-libres du véhicule, en particulier parallèlement ou simultanément, et
- un dispositif de commande qui est réalisé de sorte que des entrées de répertoire d'adresses du premier téléphone mobile et des entrées de répertoire d'adresses du second téléphone mobile puissent être transférées par l'interface radio au dispositif de communication mains-libres du véhicule, et que, à partir des entrées de répertoire d'adresses du premier téléphone mobile et des entrées de répertoire d'adresses du second téléphone mobile un répertoire d'adresses commun pour le dispositif de communication mains-libres du véhicule puisse être généré,
dans lequel
- le répertoire d'adresses du dispositif de communication mains-libres du véhicule peut être enregistré dans un dispositif de mémoire du dispositif de communication mains-libres du véhicule, et/ou peut être sorti en totalité ou partiellement sur une unité d'affichage accouplée au dispositif de communication mains-libre du véhicule,
- en association avec les entrées du répertoire d'adresses, un indicateur d'identité du téléphone mobile d'où proviennent les entrées du répertoire d'adresses peut être transféré au dispositif de communication mains-libres du véhicule,
- l'indicateur d'identité ou une information dérivée de cet indicateur peut être enregistré avec les entrées de répertoire d'adresses associées dans le dispositif de mémoire du dispositif de communication mains-libres du véhicule, et/ou peut être sorti avec les entrées du répertoire d'adresses associées à l'unité d'affichage accouplée au dispositif de communication mains-libres du véhicule,
- des entrées du répertoire d'adresses du dispositif de communication mains-libres commun peuvent être triées ou filtrées en commun, et,
- une structure d'appel basée la sélection d'une entrée de répertoire d'adresses, par l'intermédiaire d'une unité d'entrée associée au dispositif de communication mains-libres du véhicule peut être exécutée sur le téléphone mobile, dont l'indicateur d'identité est associé à l'entrée du répertoire d'adresses sélectionnée.

2. Dispositif de communication mains-libres conforme à la revendication 1, dans lequel, à côté des entrées de répertoire d'adresses de téléphone mobile, des messages, des entrées de calendrier, des tâches et/ou des notices peuvent être transférés du téléphone mobile au dispositif de communication mains-libres du véhicule par l'interface radio, et à partir des messages, entrées de calendrier tâches et/ou notices transféré, il est possible de générer une liste de messages commune, un calendrier commun, une liste de tâches commune et/ou une liste de notices commune.

3. Dispositif de communication mains-libres conforme à l'une des revendications précédentes, dans lequel, suite à un déclenchement par l'utilisateur, un dispositif de haut-parleurs et un dispositif de microphones du dispositif de communication mains-libres du véhicule, peuvent être commutés d'une liaison de communication établie par l'intermédiaire du premier téléphone mobile sur une liaison de communication établie sur le second téléphone mobile et inversement.

4. Dispositif de communication mains-libres conforme à l'une des revendications précédentes, dans lequel suite à un déclenchement par l'utilisateur un dispositif de haut-parleurs et un dispositif de microphones du dispositif de communication mains-libres du véhicule peuvent être commutés simultanément sur une liaison de communication établie sur le premier téléphone mobile et sur une liaison de communication établie sur le second téléphone mobile.
